# FASCICULE DE BREVET EUROPEEN

(11) **EP 3 231 071 B1**
(45) Date de publication et mention de la délivrance du brevet: **03.04.2024**
(21) Numéro de dépôt: 15813743.0
(22) Date de dépôt: 10.12.2015
(51) Int. Cl.: H02K 1/278, H02K 11/215, H02K 21/16, H02K 21/24, H02K 11/33, H02K 29/08, H02K 37/14, H02K 1/14, H02K 3/32, H02K 3/52, H02K 5/08, H02K 5/173, H02K 5/22

(54) **ACTIONNEUR AVEC MODULES STATORIQUE ET ROTORIQUE ENROBES**
AKTUATOR MIT STATOR- UND UMGEBENDEN ROTORMODULEN
ACTUATOR WITH STATOR AND SURROUNDED ROTOR MODULES

(30) Priorité: 11.12.2014 FR 1462289
(43) Date de publication de la demande: 18.10.2017
(73) Titulaire: MMT SA, 6304 Zug (CH)
(72) Inventeur: ANDRIEUX, Gaël, 2533 Evilard (CH); THIBAUT, Pascal, 2608 Courtelary (CH); RIOU, Gaëtan, 25500 Morteau (FR)
(74) Mandataire: IP Trust
(86) Numéro de dépôt international: PCT/EP2015/079302
(87) Numéro de publication internationale: WO 2016/092035

(56) Documents cités:
- EP-A1- 2 781 758
- EP-A2- 1 677 404
- EP-A2- 2 164 148
- WO-A1-2011/159674
- WO-A1-2014/106712
- FR-A1- 2 931 801
- US-A- 5 583 419
- US-A1- 2004 061 380
- US-A1- 2005 274 556
- US-A1- 2008 024 028
- US-A1- 2008 150 356
- US-A1- 2010 071 371
- US-A1- 2010 102 625
- US-A1- 2010 301 691
- US-A1- 2012 065 790
- US-A1- 2012 091 789
- US-A1- 2012 232 728
- US-A1- 2013 062 943
- US-B1- 6 314 009
- US-B2- 7 468 561

## Description

### Domaine de l'invention

La présente invention concerne le domaine des moteurs électriques polyphasés de type sans balais présentant une série d'aimants permanents interagissant avec un stator ferromagnétique doux supportant des bobines électriques. Les bobines sont alimentées par un courant alternatif polyphasé au travers d'une commutation électronique fournie par un circuit électronique.

L'invention propose plus particulièrement un actionneur formé d'un ensemble moteur et électronique intégrés de manière compacte et simple dans des modules séparés enrobés (par exemple par surmoulage d'une matière plastique, polymère ou même métallique) puis assemblés.

On entend, dans la suite de ce texte, par « moteur » l'ensemble des éléments (bobine, stator ferromagnétique doux, aimants permanents et culasse ferromagnétique douce éventuelle) du circuit magnétique permettant de réaliser l'effort magnétique et par « actionneur » l'ensemble du moteur, dans sa version finalisée, associé aux éléments d'alimentation électrique du moteur et de détection de position.

### Etat de la technique

On connait, dans l'état de la technique, nombre de moteurs électriques polyphasés sans balai à aimants permanents comme par exemple ceux décrits dans le brevet EP0949747 ou la demande EP2002531, tous deux de la demanderesse. Les moteurs de ce type sont composés d'un ensemble stator bobiné et d'un ensemble rotor comprenant une pluralité d'aimants. Afin d'assurer la commutation électrique des différentes phases de ces moteurs, la solution généralement choisie consiste à utiliser au moins une sonde de Hall placée en regard de la pluralité d'aimants ou d'un ensemble aimanté auxiliaire dédié à cette commutation.

Afin de réaliser un actionneur, les sondes de Hall, ainsi que le circuit électronique les pilotant, et l'ensemble de connexion électrique des phases du moteur doivent être assemblés dans un produit intégral pouvant être placé et utilisé dans une application quelconque (par exemple pour déplacer différentes vannes, volets ou arbres dans un moteur à combustion interne).

Dans les solutions de l'art antérieur, il existe diverses réalisations. Par exemple, certaines solutions consistent à surmouler partiellement le moteur, le plus souvent seul le stator étant surmoulé. La demande de brevet PCT WO/2009/055625 se rapporte à un ensemble stator et à un procédé de réalisation d'un ensemble stator. L'ensemble stator est surmoulé d'une composition polymère thermiquement conductrice et électriquement isolante. Le noyau de stator de l'ensemble stator est recouvert d'un composant adhésif afin de permettre un meilleur transfert de chaleur à l'interface du noyau de stator et des bobines surmoulées.

On connaît aussi la demande de brevet EP1677404 décrit un moteur pour une direction assistée électrique, dans lequel la connexion de la bobine peut être facilement réalisé avec un gain de place, et un procédé de fabrication du moteur. Des bobines de stator sont assemblés en un noyau de stator et reliées par phase par des anneaux de liaison.

Les demandes de brevet EP2781758, US2010/301691, WO2011159674 ou US2008/023028 décrivent d'autres exemples de réalisation de l'art antérieur.

Inconvénients des solutions de l'art antérieur

Les solutions de l'art antérieur présentent l'inconvénient d'un assemblage compliqué, nécessitant un positionnement mécanique précis des pièces statoriques dans le boîtier et/ou par rapport au rotor. Lors de l'assemblage, il est nécessaire de réaliser de multiples liaisons mécaniques et électriques afin d'assurer le raccordement des bobines à un faisceau de câblage ou des éléments de connexion avec le circuit électronique, les connecteurs électriques et le cas échéant avec un circuit imprimé. Ces différentes opérations nécessitent une grande précision et sont sources de fragilité du dispositif.

Les solutions de surmoulage connues dans l'art antérieur ne permettent pas d'assurer l'enrobage de l'intégralité des composants d'une structure stator et ne permettent que partiellement d'éviter le problème de l'assemblage et des connexions électriques.

En particulier, dans la solution proposée dans la demande de brevet EP1677404, le stator bobiné et la connectique ne forment pas une ensemble encapsulé, ce qui conduit à des faiblesses mécaniques.

### Solution apportée par l'invention

La présente invention vise à remédier à ces inconvénients en proposant un dispositif comprenant un module statorique enrobé, insérable dans le boîtier d'un moteur ou d'un actionneur pour interagir de manière électromagnétique avec un rotor et coopérant avec un module rotorique.

L'invention concerne selon son acception la plus générale un actionneur électrique tel que défini dans la revendication 1, ainsi qu'un procédé de fabrication d'un module rotorique aimanté conforme à la revendication 13.

Le module rotorique forme ainsi un premier composant intégrant :
le rotor constitué d'une culasse sur laquelle sont montés les aimants permanents et l'axe de sortie,
un élément de guidage
une flasque assurant l'enrobage de cet ensemble.

Le module statorique forme un deuxième composant intégrant :
le stator bobiné
un premier ensemble de connexion électrique
ces éléments étant également enrobés.

Le moteur est ainsi constitué de deux composants complémentaires ne nécessitant pas de liaison électrique, ni de pièces d'assemblages. La liaison est assurée par la configuration complémentaire des deux composants enrobés, présentant chacun une interface d'assemblage complémentaire indexée pour garantir le positionnement relatif précis de ces deux composants.

Un avantage important de cette réalisation modulaire enrobée est une meilleure gestion de la température des ensembles de connexion électrique et du circuit imprimé les reliant. En effet, lorsque l'actionneur travaille à haute température, la chaleur est confinée au niveau du stator, qui supporte aisément cette charge thermique, et n'est que faiblement diffusée à l'arrière de l'actionneur vers les éléments de connexion électriques et électroniques. Il est ainsi possible de limiter l'échauffement du circuit imprimé de façon importante par rapport aux réalisations de l'art antérieur.

Un avantage principal de l'invention et sa réalisation modulaire est une réduction importante du nombre de pièces nécessaires à la réalisation de l'actionneur lorsque comparé aux réalisations de l'art antérieur.

Optionnellement, le module statorique comprend en plus un circuit électronique également enrobé pour former un second composant « intelligent ».

De manière préférée mais non limitative, l'actionneur comprend un deuxième ensemble de connexion électrique gérant l'alimentation et les signaux des éléments de détection nécessaire à la commutation des différentes phases du moteur et le module statorique enrobe le premier et deuxième ensemble de connexion électrique. Ce deuxième ensemble est ainsi nécessaire lorsque l'on souhaite piloter le moteur grâce à un ensemble codeur intégré au moteur. Il n'est pas nécessaire si l'on souhait piloter le moteur en mode « sans capteur » auto-commuté (sensorless).

L'ensemble statorique présente une cavité apte à recevoir ledit module rotorique.

Dans un mode de réalisation les premier et deuxième ensembles de connexion électrique forment un prolongement enrobé radial dudit module statorique.

Dans un autre mode de réalisation les premier et deuxième ensembles de connexion électrique forment un prolongement enrobé axial dudit module statorique.

Préférentiellement, le flasque présente une forme extérieure complémentaire de la zone de réception du module statorique pour permettre un assemblage aisé.

Ledit flasque du module rotorique présente des ergots de centrage aptes à s'engager dans des logements complémentaires formés sur le module statorique.

Dans un mode particulier de réalisation, le module statorique comprend un ensemble de tôles superposées présentant une pluralité de dents dont une partie au moins supporte une bobine électrique, chacune desdites bobines électriques présentant des pattes de connexion s'étendant axialement, ledit module statorique comportant en outre un ensemble de connexion formé de pattes de connexion pour le raccordement d'un connecteur complémentaire, la totalité des composants comprenant ledit ensemble de tôles bobiné, lesdites pattes de connexion des bobines et lesdites pattes de connexion pour le raccordement d'un connecteur sont enrobées dans une matière plastique isolante pour former un bloc monolithique englobant les surfaces extérieures desdites tôles superposées.

La surface intérieure desdites dents des tôles statoriques peut être rendue affleurant par rapport à la surface intérieure dudit bloc monolithique et la cavité rendue cylindrique et fermée à sa partie arrière par un fond moulé. Dans ce cas, ledit fond moulé peut comprendre une bague pour le guidage de l'axe de rotation du rotor.

Selon une variante, la surface intérieure desdites dents des tôles statoriques est incluse dans ledit bloc monolithique, l'épaisseur de la matière plastique enrobant étant inférieure à l'entrefer compris entre la surface cylindrique extérieure du rotor et l'enveloppe cylindrique définie par la surface des dents statoriques.

L'invention concerne aussi un module rotorique aimanté formé par une douille enrobée comprenant un roulement pour le guidage du rotor, la douille étant entourée par une collerette apte à être fixée sur une structure statorique par soudage ou vissage ou rivetage.

Dans une variante de réalisation, la cavité est débouchant et l'actionneur présente un troisième module comportant un circuit imprimé et fermant l'actionneur sur la partie arrière.

L'invention concerne aussi un procédé de fabrication d'un module rotorique aimanté caractérisé en ce qu'il comporte les étapes suivantes :
- Surmoulage du roulement avant pour former le flasque avec ses ergots de positionnement et d'indexation,
- Assemblage d'un paquet de tôles sur l'axe du rotor,
- Collage du ou des aimants du moteur sur le paquet de tôles,
- Assemblage du roulement arrière sur l'axe comportant le paquet de tôles.

### Description détaillée d'exemples non limitatifs de réalisation

L'invention sera mieux comprise à la lecture de la description qui suit, se référant aux dessins annexés correspondant à des exemples non limitatifs de réalisation, où :
- les figures 1 et 2 représentent le module statorique bobiné avec les moyens de connexion électrique du moteur et de l'ensemble de détection,
- la figure 3 représente le module statorique enrobé,
- les figures 4 et 5 représentent des vues de la cavité formée dans le stator enrobé respectivement avant et après l'insertion du circuit électronique,
- les figures 6 et 7 représentent des vues du module rotorique respectivement en vue de trois-quarts et en coupe longitudinale,
- les figures 8 et 9 représentent des vues de l'assemblage du stator enrobé et du module rotorique respectivement avant assemblage et après assemblage, dans un premier mode de réalisation dit mode « discal »,
- les figures 10 à 12 représentent des vues de l'assemblage du stator enrobé et du module rotorique respectivement avant assemblage (figure 10), en vue de coupe (figure 11) et après assemblage (figure 12), dans un second mode de réalisation dit mode « tubulaire »,
- les figures 13 et 14 représentent des vues, respectivement avant assemblage des modules et après assemblage des modules, dans un troisième mode de réalisation où le module rotorique vient autour du module statorique,
- la figure 15 représente une vue en coupe des modes décrits en figures 13 et 14,
- les figures 16 et 17 représentent des vues en coupe, respectivement du module rotorique et du module statorique, d'un mode de réalisation tubulaire alternatif,
- la figure 18 une vue en coupe du moteur assemblé à partir des modules décrits en figures 16 et 17
- la figure 19 représente une variante de réalisation de l'invention.

L'invention décrite concerne un moteur rotatif formé par assemblage d'un module rotorique et d'un module statorique. Les constituants de ces modules sont liés mécaniquement pour être définitivement solidarisés.

Le module rotorique est définitivement assemblé. De même, le module statorique est enrobé dans une matière plastique isolant ne laissant dépasser que les éléments de connexion électrique. Ces deux modules sont assemblés par une insertion du module rotorique dans un logement prévu à cet effet dans le module statorique, et réunis par vissage, soudure ou collage. Un troisième module peut éventuellement venir fermer l'actionneur lorsque le module statorique présente une cavité débouchant.

### Description détaillée des figures

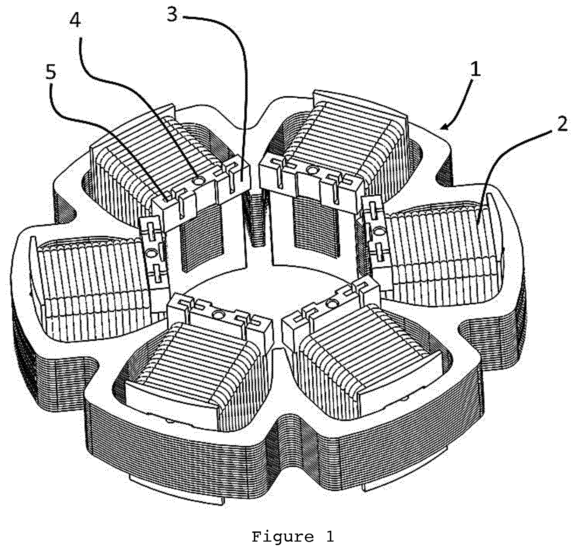

Dans un premier mode de réalisation, un actionneur selon l'invention comprend communément un moteur ayant un stator (1) présentant des dents s'étendant radialement, munies de bobines électriques (2) portées par des corps de bobine (3) comme visibles en figure 1.

Dans cet exemple décrit, le moteur est triphasé et tel que décrit dans la demande EP2002531, mais l'invention n'est nullement limitée à cette technologie particulière.

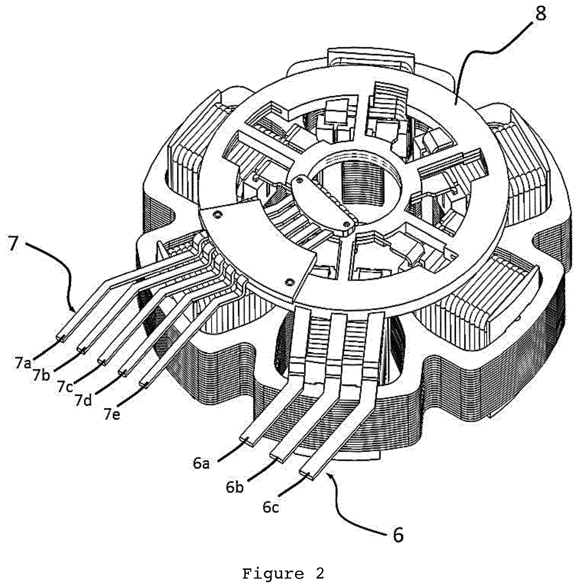

Un premier ensemble de connexion (6) se positionne sur une face frontale du stator (1) pour assurer la connexion électrique des bobines (2). On positionne ensuite le deuxième ensemble de connexion (7), destiné à gérer (alimentation et signal de sortie) les éléments de détection (typiquement des sondes à effet Hall) nécessaires au fonctionnement du moteur sans balai suivant les enseignements de l'état de l'art en la matière, sur une surface extérieure du premier ensemble de connexion (6) comme représenté en figure 2.

L'indexation du premier ensemble de connexion (6) sur le stator (1) est assurée grâce à des cavités de guidage (4) réalisées dans les corps de bobine (3) permettant un positionnement précis. La connexion électrique est assurée par l'insertion, dans les encoches (5) du corps de bobine (3), des terminaisons du premier ensemble de connexion (6), par exemple par déplacement de l'isolant (IDC pour *Insulation Displacement contact* en anglais).

Dans cet exemple, il existe trois phases électriques qui sont alimentées par 3 pistes distinctes (6a, 6b, 6c). Les pistes (6a, 6b, 6c) s'étendent radialement puis latéralement par rapport au stator, et se présentent sous la forme de pistes à section rectangulaire.

Les pistes se terminent par des pattes de raccordement fourchues (non montrées) permettant de connecter une phase électrique par contact IDC.

Cet ensemble est réalisé par découpage et pliage d'une feuille métallique, par exemple du bronze ou d'un alliage de cuivre de type CuZn30, puis surmoulée avec une résine isolante (8) comme représenté en figure 2.

Le deuxième ensemble de connexion (7) représenté en figure 2 permet la connexion d'un ensemble de signaux -par exemple ceux de sondes de Hall- appartenant à un codeur servant à détecter la position du rotor dudit moteur depuis un circuit imprimé vers ce même connecteur. Ici, cinq pistes (7a à 7e) sont utilisées pour permettre l'alimentation et l'exploitation des signaux des sondes de Hall. Ce deuxième ensemble (7) est ensuite positionné sur le premier ensemble enrobé comme représenté en figure 2.

Ce mode de réalisation du stator (1), associé aux premiers (6) et deuxième (7) ensemble de connexion, est décrit plus précisément dans la demande FR 12/59035.

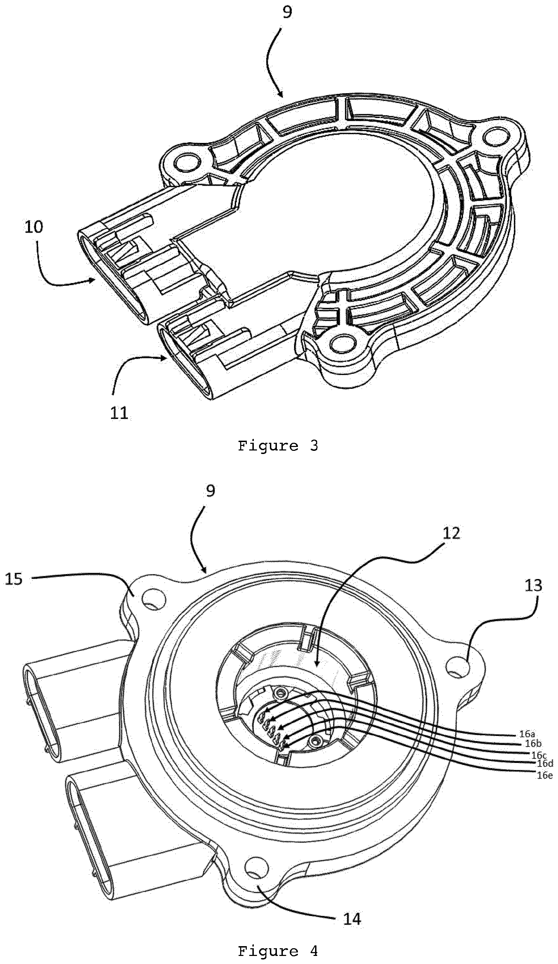

Le stator (1) ainsi que les premiers (6) et deuxième (7) ensemble de connexion sont enrobés ensemble dans un moule d'injection pour former une pièce monolithique et fermée représentée en figure 3. L'ensemble enrobé constitue alors le module statorique (9).

La forme de ce module statorique (9) peut varier en fonction des applications finales. Dans l'exemple des figures 1 à 6, il s'agit d'un premier mode de réalisation dit « discal » dans le sens où l'actionneur réalisé présente une dimension plus importante suivant son diamètre que suivant sa hauteur.

L'enrobage ici réalisée par surmoulage recouvre l'intégralité des constituants du stator, à l'exception des extrémités des différentes pistes (7a à 7e et 6a à 6c), qui dépassent, à l'intérieur de deux ouvertures (10 et 11) pour permettre une connexion électrique à une prise extérieur ou à un circuit électronique annexe extérieur.

A l'intérieur de ce module statorique (9), les dents du stator (1) sont soit affleurant au surmoulage, soit recouvertes d'une peau mince lors du surmoulage. Cette pièce monolithique formant le module statorique (9) présente une cavité annulaire (12) dont le fond est fermé dans ce premier mode de réalisation de la figure 4. Le module statorique (9) présente trois protubérances latérales (13 à 15) percées pour permettre la fixation de l'actionneur. Le module statorique (9) surmoulé est ainsi totalement étanche et autonome.

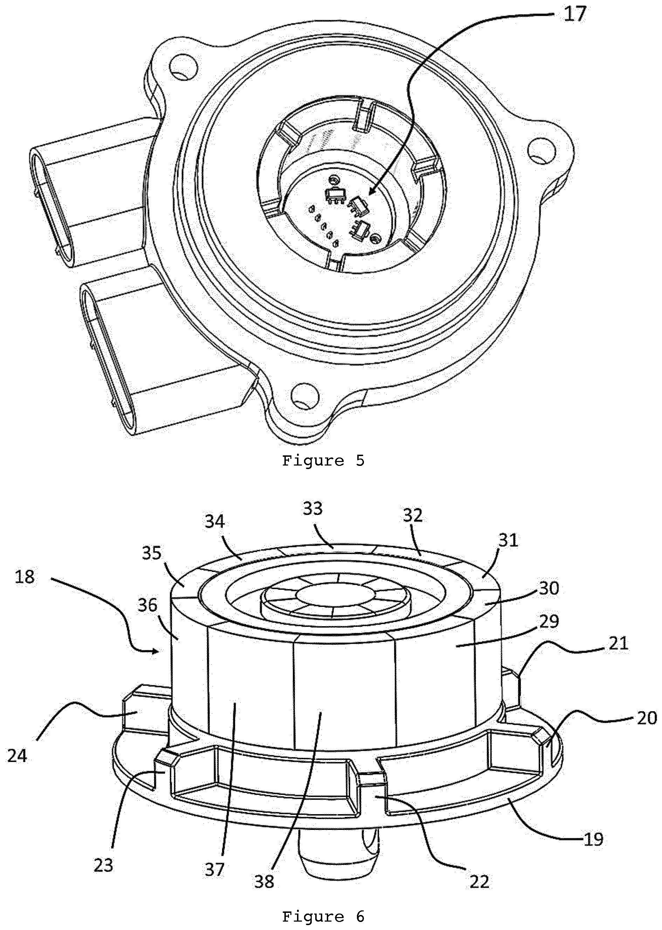

Le fond de la cavité (12) laisse dépasser les pattes (16a à 16e) du deuxième ensemble de connexion (7), extrémités intérieures des pistes (7a à 7e). Ces pattes (16a à 16e) assurent la liaison avec un circuit électronique (17) de forme discal, pouvant être logé au fond de la cavité (12) comme représenté en figure 5.

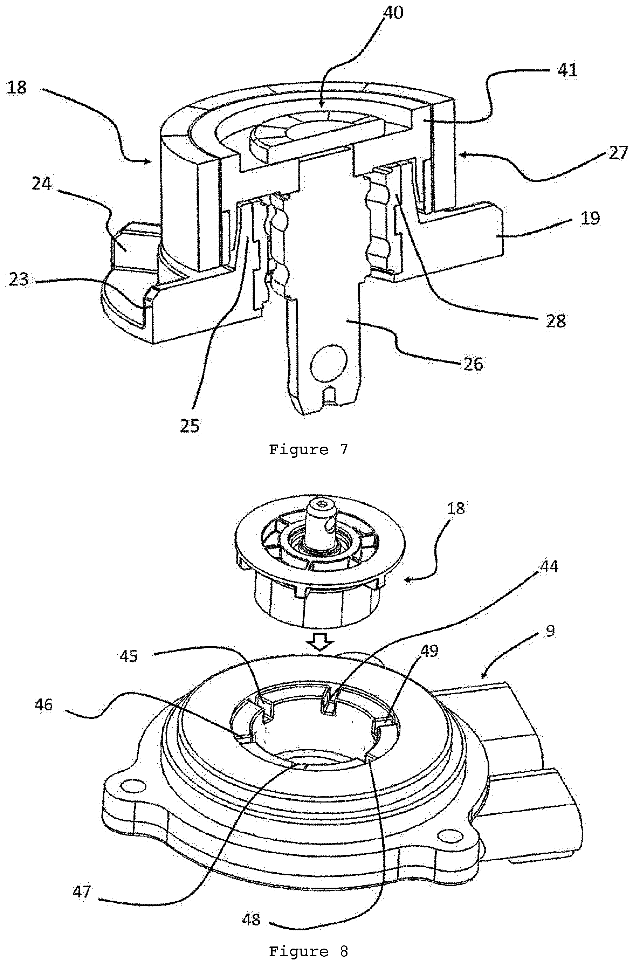

Le module statorique (9) permet, par sa forme, de recevoir un module rotorique (18) présenté en figures 6 et 7.

Le module rotorique (18) comprend un flasque (19) présentant des ergots de centrage (20 à 24) s'étendant radialement et ayant aussi une fonction de rigidité mécanique. Le flasque (19) forme, sur l'intérieur du module rotorique (18), une bague (25) recevant un élément de guidage (28) guidant l'axe (26) du rotor magnétique (27).

Le rotor magnétique (27) est constitué par une alternance d'aimants permanents (29 à 38) de polarités (Nord / Sud) alternées.

La figure 7 présente une vue en coupe du module rotorique (18) permettant de mieux apprécier le positionnement relatif du flasque (19) et du roulement (25) de guidage de l'axe (26). On y voit la culasse ferromagnétique (41) sur laquelle sont positionnés les aimants (29 à 38) et l'aimant codeur (40) constitué d'une alternance de polarités aimantées. Cet aimant codeur (40) sert à la détection de position du rotor en collaboration avec les éléments de détection et le circuit électronique (17) dans le fond de la cavité (12) non débouchant du module statorique (9), en regard de cet aimant codeur (40) lorsque les modules statorique (9) et rotorique (18) sont assemblés.

La figure 8 représente la mise en place du module rotorique (18) dans le module statorique (9), par insertion selon un déplacement axial (relativement à l'axe de rotation de l'actionneur - le déplacement est visualisé par la flèche épaisse), indexation des deux modules grâce aux ergots (20 à 24) qui viennent se loger dans des logements complémentaires (44 à 49), puis assemblage par vissage, collage, soudure ultrason ou tout autre mode d'assemblage connu.

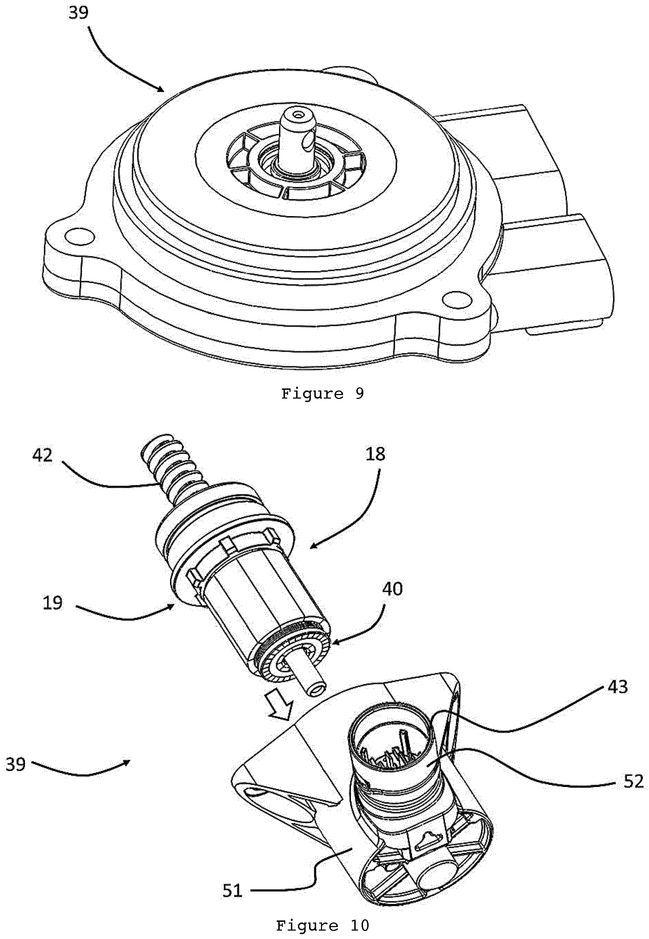

La figure 9 représente une vue des deux modules assemblés formant alors l'actionneur (39) dans sa version finalisée.

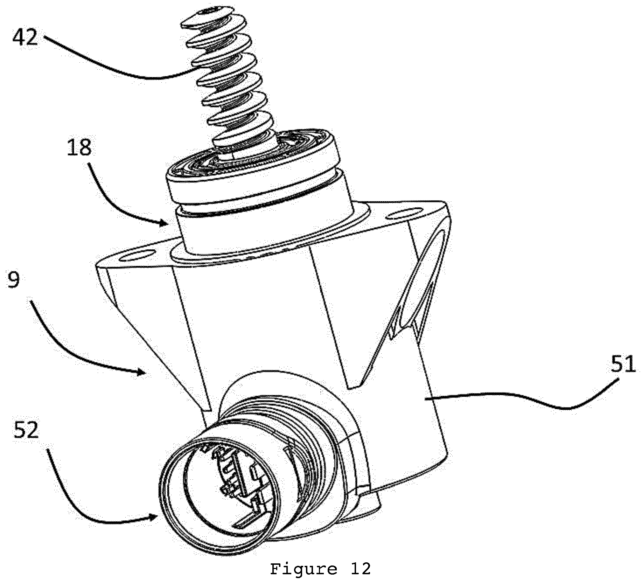

Les figures 10, 11 et 12 représentent un deuxième mode de réalisation de l'actionneur (39) suivant une forme dite « tubulaire », c'est-à-dire un actionneur dont la dimension de hauteur est supérieure à celle de son diamètre.

Dans cette variante, l'actionneur (39) entraîne une vis (42). Dans cet exemple, le module statorique (9) présente localement une prise de connexion (43) électrique s'étendant radialement par rapport à l'axe de rotation de l'actionneur (39).

Le module rotorique (18) comprend un flasque (19) recevant, de même que pour le premier mode de réalisation, un logement pour recevoir un élément de guidage (28).

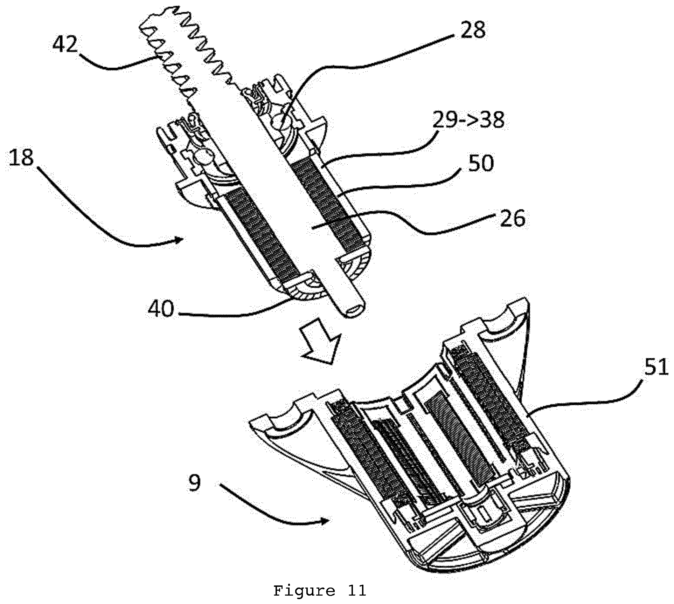

La figure 11 représente une vue en coupe du stator de cette autre variante de réalisation. Le module rotorique (18) présente un cœur intérieur formé par un empilement de tôles discales (50) engagées de force sur un axe (26) et supportant des aimants permanents (29 à 38) en forme de tuiles.

Le stator (1) est alimenté par l'intermédiaire d'un ensemble de connexion décrit dans le brevet européen EP2212985 de la demanderesse. Le stator (1) reçoit un deuxième ensemble de connexion (7) pour le positionnement d'une sonde de Hall.

Cet ensemble est surmoulé pour former une pièce monolithique, avec un corps principal (51) et un corps secondaire (52) dont l'axe longitudinal est perpendiculaire à celui du corps principal (51).

Dans les modes de réalisation montrées précédemment, le module rotorique (18) vient s'indexer, par complémentarité des formes des modules, à l'intérieur du module statorique (9).

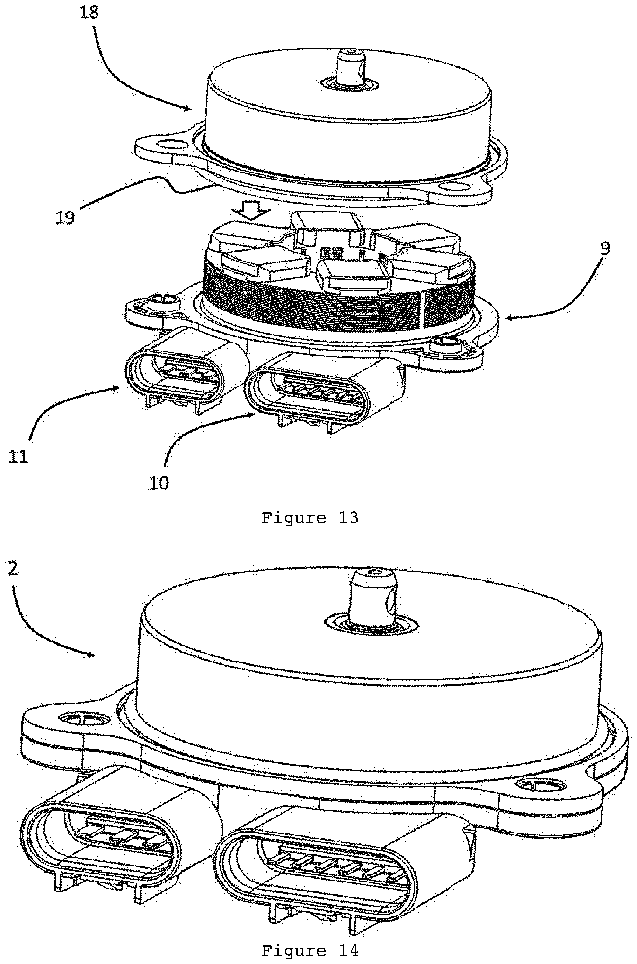

Les figures 13 et 14 montrent un troisième mode de réalisation où le module rotorique (18) vient se fixer au module statorique (9) par l'extérieur.

Le flasque (19) du module rotorique (18) est en effet ici d'un diamètre supérieur à celui du stator (1) du module statorique (9).

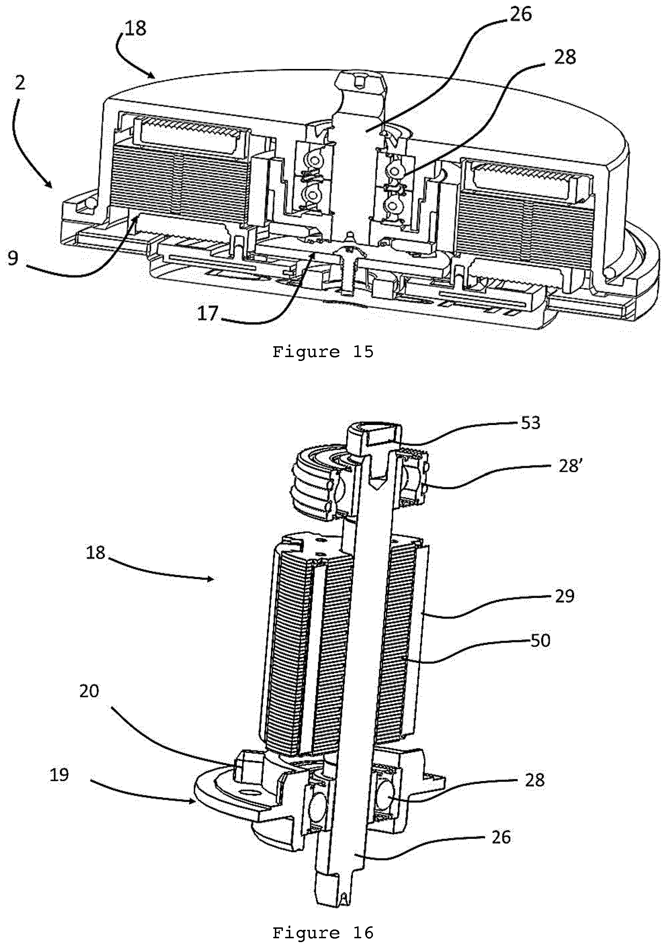

La figure 15 permet d'apprécier le détail des éléments que l'on retrouve dans ce mode de réalisation. Les différents éléments pointés étant identiques dans leur fonction à ceux cités dans les modes précédents.

L'invention n'est pas limitée à un moteur présentant un stator à dents radiales. Elle s'applique aussi à un moteur dont le stator présente des dents s'étendant parallèlement à l'axe, avec un rotor discal, ou encore un moteur linéaire.

La variante de réalisation des figures 10, 11 et 12 permet de réaliser une version dite « tubulaire » décrite précédemment.

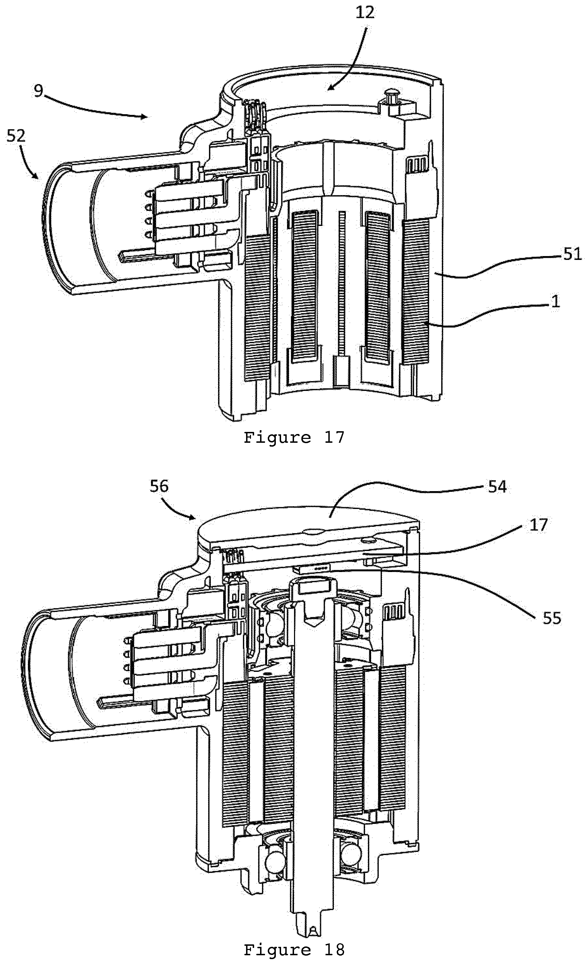

Il est possible d'envisager une alternative de réalisation afin d'obtenir un ensemble plus compact. Cette alternative est particulièrement décrite en figures 16 à 18.

Ce mode de réalisation diffère du mode décrit en figure 10 en ce que le module rotorique (18) comprend un deuxième un élément de guidage (28') qui est rendu solidaire de l'axe (26) après le montage du paquet de tôles (50). Cette réalisation permet de monter deux éléments de guidage (28 et 28') de plus petite taille et permet un assemblage plus aisé dans le module statorique (9).

Le module rotorique (18) est typiquement réalisé avec les étapes suivantes :
- on surmoule l'élément de guidage avant (28) pour former le flasque avec ses ergots (20) de positionnement et d'indexation,
- on assemble le paquet de tôles (50) sur l'axe (26) du rotor,
- on colle le ou les aimants (29) du moteur sur le paquet de tôles (50),
- on assemble l'élément de guidage arrière (28') sur l'axe (26) comportant le paquet de tôles (50).

Dans l'exemple décrit on assemble ensuite un aimant capteur (53) avec son support sur l'extrémité libre de l'axe (par chassage ou vissage par exemple).

Cet ensemble axe + paquet de tôles + aimants moteur + roulement arrière + aimant capteur sur son support est enfin assemblé, après aimantation des aimants du moteur et du capteur en place, sur le module surmoulé formé de l'élément de guidage arrière (28) et du flasque (19).

Le module statorique (9) présente particulièrement une cavité intérieure (12) débouchant qui permet un assemblage du module rotorique (18) formé plus aisé et de venir rapporter un troisième module (56) fermant l'actionneur sur la partie arrière.

Après l'assemblage des deux modules statorique (9) et rotorique (18), il reste en effet à ajouter un module électronique complémentaire comprenant, dans cet exemple, le circuit imprimé (17) recevant le ou les sondes de détection (55) du champ magnétique capteur et un capot de fermeture (54). Cette réalisation permet avantageusement de permettre l'intégration d'un circuit imprimé de taille plus importante (que celui présenté en mode de réalisation des figures 10 et 11) pour éventuellement pouvoir placer aussi un circuit électronique de pilotage embarqué pilotant directement les phases du moteur.

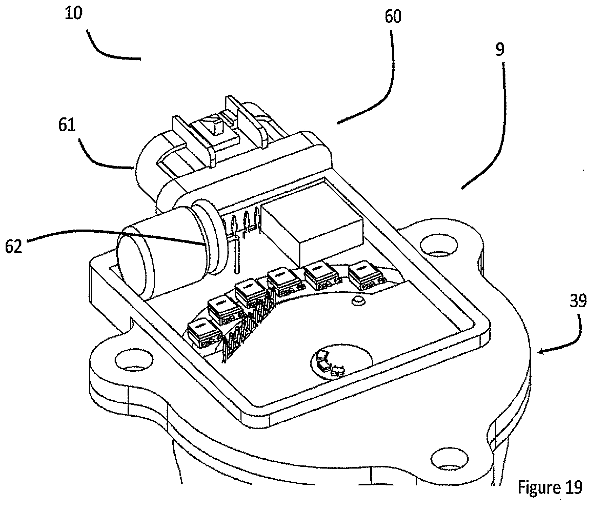

La figure 19 présente un mode de réalisation alternatif d'un actionneur (39) selon l'invention où le module statorique (9) accueille un circuit électronique embarqué permettant la gestion du pilotage du moteur. On parle alors d'un moteur « intelligent » ou « smart » et la connectique sortant du moteur est simplifiée car il n'y a pas à sortir hors du moteur les pattes électriques du deuxième ensemble de connexion (7). Les éléments typiques que l'on peut trouver dans ce circuit électronique sont : un module de gestion (60) de la logique de commutation, une ou plusieurs capacités de filtrage (61), un ensemble de transistors (62) de commutation de type MosFet pour commander l'alimentation des différentes phases. Ces éléments électroniques sont alors positionnés sur le module statorique surmoulé (9) et un couvercle (non montré) peut être placé collé, soudé, vissé ou riveté pour terminer le moteur.

## Revendications

1. - Actionneur électrique formé d'un moteur sans balais polyphasé comportant un rotor (27) muni d'aimants permanents (29 à 38) et solidaire d'un axe de sortie (26), et un stator (1) portant des bobines (2) et assurant l'entraînement magnétique du rotor (27), un premier ensemble de connexion électrique (6) alimentant les bobines (2), ledit stator (1) étant intégré dans un module statorique (9) formé d'une matière enrobant le stator (1) bobiné ainsi que le premier (6) ensemble de connexion électrique, **caractérisé en ce que** ledit rotor (27) est intégré dans un module rotorique (18) constitué par un flasque (19) enrobant un roulement de guidage (28) assurant le guidage de l'axe (26) du rotor (27) et **en ce que** les modules statorique (9) et rotorique (18) présentent des éléments d'indexation et de fixation l'un par rapport à l'autre, ledit flasque (19) avec ses ergots de positionnement et d'indexation présentant des ergots de centrages (20, 21, 22, 23, 24) qui s'étendent radialement et qui sont aptes à s'engager dans des logements complémentaires (44, 45, 46, 47, 48, 49) formés sur le module statorique (18), ledit flasque (19) formant, sur l'intérieur du module rotorique (18), une bague (25) recevant le roulement de guidage (28), le moteur est constitué de deux composants complémentaires :
- Le module rotorique (18) formant un premier composant intégrant le rotor (27), ledit roulement de guidage (28) et le flasque (19) assurant l'enrobage de ce roulement de guidage (28) ;
- Le module statorique (9) formant un deuxième composant intégrant le stator (1) et le premier ensemble de connexion électrique (6) enrobés ensemble,
- Le module rotorique (18) est mis en place dans le module statorique (9) par insertion selon un déplacement axial, relativement à l'axe de rotation de l'actionneur.

2. - Actionneur selon la revendication 1 **caractérisé en ce qu'**il comprend un deuxième (7) ensemble de connexion électrique gérant l'alimentation et les signaux des éléments de détection nécessaires à la commutation des différentes phases du moteur et **en ce que** le module statorique (9) enrobe le premier (6) et deuxième (7) ensemble de connexion électrique.

3. - Actionneur électrique selon la revendication 2 **caractérisé en ce que** les premier (6) et deuxième (7) ensembles de connexion électrique forment un prolongement enrobé radial dudit module statorique (9).

4. - Actionneur électrique selon la revendication 2 **caractérisé en ce que** les premier (6) et deuxième (7) ensembles de connexion électrique forment un prolongement enrobé axial dudit module statorique (9).

5. - Actionneur électrique selon l'une quelconque des revendications précédentes **caractérisé en ce que** ledit flasque (19) présente une forme extérieure complémentaire de la zone d'indexation du module statorique (9).

6. - Actionneur électrique selon l'une quelconque des revendications précédentes **caractérisé en ce que** ledit module statorique (9) comprend un ensemble de tôles superposées (50) présentant une pluralité de dents dont une partie au moins supporte une bobine électrique, chacune desdites bobines électriques présentant des pattes de connexion s'étendant axialement, ledit module statorique (9) comportant en outre un ensemble de connexion (7) formé de pattes de connexion pour le raccordement d'un connecteur complémentaire, la totalité des composants comprenant ledit ensemble de tôles bobiné, lesdites pattes de connexion des bobines et lesdites pattes de connexion pour le raccordement d'un connecteur sont enrobées dans une matière plastique isolante pour former un bloc monolithique englobant les surfaces extérieures desdites tôles superposées (50).

7. - Actionneur électrique selon la revendication précédente **caractérisé en ce que** la surface intérieure desdites dents des tôles statoriques est affleurant par rapport à la surface intérieure dudit bloc monolithique.

8. - Actionneur électrique selon la revendication 1 **caractérisé en ce qu'**une cavité (12) apte à recevoir ledit module rotorique (18) est cylindrique est fermée à sa partie arrière par un fond moulé.

9. - Actionneur électrique selon la revendication précédente **caractérisé en ce que** ledit fond moulé comprend une bague pour le guidage de l'axe (26) de rotation du rotor (27).

10. - Actionneur électrique selon la revendication 6 **caractérisé en ce que** la surface intérieure desdites dents des tôles statoriques est incluse dans ledit bloc monolithique, l'épaisseur de la matière plastique enrobant étant inférieure à l'entrefer compris entre la surface cylindrique extérieure du rotor et l'enveloppe cylindrique définie par la surface des dents statoriques.

11. - Actionneur électrique selon la revendication 1 **caractérisé en ce que** ladite cavité (12) est débouchant.

12. - Actionneur électrique selon la revendication précédente **caractérisé en ce que** qu'il présente un troisième module comportant un circuit électronique (17) et **en ce que** le troisième module ferme l'actionneur sur la partie arrière.

13. - Procédé de fabrication d'un actionneur électrique conforme à la revendication 1 avec un module rotorique aimanté (18) constitué par un flasque (19) enrobant un roulement de guidage (28) assurant le guidage de l'axe (26) du rotor (27), **caractérisé en ce qu'**il comporte les étapes suivantes :
- Surmoulage d'un roulement de guidage avant (28) pour former le flasque avec ses ergots (20) de positionnement et d'indexation,
- Assemblage d'un paquet de tôles (50) sur l'axe (26) du rotor (27),
- Collage du ou des aimants (29) du moteur sur le paquet de tôles (50),
- Assemblage du roulement de guidage arrière (28') sur l'axe (26) comportant le paquet de tôles (50).

14. - Actionneur électrique selon la revendication 1 **caractérisé en ce que** l'actionneur est intelligent, le module statorique (9) enrobé accueillant un circuit électronique (17) destiné à piloter l'actionneur et présentant des transistors de commutation et un circuit de commande logique de ces transistors de commutation.

15. - Actionneur électrique selon la revendication précédente **caractérisé en ce qu'**un couvercle (54) vient enfermer ce circuit électronique (17) placé sur ledit module statorique (9).

## Patentansprüche

1. Elektrischer Aktuator, der aus einem mehrphasigen bürstenlosen Motor besteht, der einen Rotor (27), der mit Permanentmagneten (29 bis 38) versehen und mit einer Ausgangsachse (26) fest verbunden ist, und einen Stator (1) aufweist, der Wicklungen (2) trägt und den magnetischen Antrieb des Rotors (27) sicherstellt, wobei eine erste elektrische Verbindungsanordnung (6) die Wicklungen (2) versorgt, wobei der Stator (1) in ein Statormodul (9) integriert ist, das aus einem Material ausgebildet ist, das den bewickelten Stator (1) sowie die erste (6) elektrische Verbindungsanordnung umhüllt,
**dadurch gekennzeichnet, dass** der Rotor (27) in ein Rotormodul (18) integriert ist, das aus einem Flansch (19) besteht, der ein Führungslager (28) umhüllt, das die Führung der Achse (26) des Rotors (27) sicherstellt, und dass das Stator- (9) und das Rotormodul (18) Elemente zum Indexieren und zum Befestigen relativ zueinander vorweisen, wobei der Flansch (19) mit seinen Positionierungs- und Indexierungsnocken Zentrierungsnocken (20, 21, 22, 23, 24) vorweist, die sich radial erstrecken und die geeignet sind, in komplementäre Einlassungen (44, 45, 46, 47, 48, 49) einzugreifen, die auf dem Statormodul (18) ausgebildet sind, wobei der Flansch (19) auf der Innenseite des Rotormoduls (18) einen Ring (25) ausbildet, der das Führungslager (28) aufnimmt, wobei der Motor aus zwei komplementären Komponenten besteht:
- dem Rotormodul (18), das eine erste Komponente ausbildet, die den Rotor (27), das Führungslager (28) und den Flansch (19) integriert, der die Umhüllung dieses Führungslagers (28) sicherstellt;
- dem Statormodul (9), das eine zweite Komponente ausbildet, die den Stator (1) und die erste elektrische Verbindungsanordnung (6) integriert, die zusammen umhüllt sind,
- wobei das Rotormodul (18) in dem Statormodul (9) durch Einführen gemäß einer axialen Verschiebung relativ zu der Drehachse des Aktuators eingerichtet wird.

2. Aktuator nach Anspruch 1, **dadurch gekennzeichnet, dass** er eine zweite (7) elektrische Verbindungsanordnung umfasst, die die Versorgung und die Signale von Erfassungselementen verwaltet, die für die Umschaltung der verschiedenen Phasen des Motors erforderlich sind, und dass das Statormodul (9) die erste (6) und die zweite (7) elektrische Verbindungsanordnung umhüllt.

3. Elektrischer Aktuator nach Anspruch 2, **dadurch gekennzeichnet, dass** die erste (6) und die zweite (7) elektrische Verbindungsanordnung eine radiale umhüllte Verlängerung des Statormoduls (9) ausbilden.

4. Elektrischer Aktuator nach Anspruch 2, **dadurch gekennzeichnet, dass** die erste (6) und die zweite (7) elektrische Verbindungsanordnung eine axiale umhüllte Verlängerung des Statormoduls (9) ausbilden.

5. Elektrischer Aktuator nach einem der vorstehenden Ansprüche,
**dadurch gekennzeichnet, dass** der Flansch (19) eine Außengestalt vorweist, die komplementär zu dem Indexierungsbereich des Statormoduls (9) ist.

6. Elektrischer Aktuator nach einem der vorstehenden Ansprüche,
**dadurch gekennzeichnet, dass** das Statormodul (9) eine Anordnung von übereinanderliegenden Blechen (50) umfasst, die eine Vielzahl von Zähnen vorweisen, von denen mindestens ein Teil eine elektrische Wicklung stützt, wobei jede der elektrischen Wicklungen sich axial erstreckende Verbindungslaschen vorweist, wobei das Statormodul (9) ferner eine Verbindungsanordnung (7) aufweist, die aus Verbindungslaschen zum Anschließen eines komplementären Verbinders ausgebildet ist, wobei die Gesamtheit der Komponenten, umfassend die bewickelte Blechanordnung, die Verbindungslaschen der Wicklungen und die Verbindungslaschen zum Anschließen eines Verbinders mit einem isolierenden Kunststoffmaterial zum Ausbilden eines monolithischen Blocks umhüllt sind, der die Außenoberflächen der übereinanderliegenden Bleche (50) beinhaltet.

7. Elektrischer Aktuator nach dem vorstehenden Anspruch,
**dadurch gekennzeichnet, dass** die Innenoberfläche der Zähne der Statorbleche relativ zu der Innenoberfläche des monolithischen Blocks bündig ist.

8. Elektrischer Aktuator nach Anspruch 1, **dadurch gekennzeichnet, dass** ein Hohlraum (12), der geeignet ist, das Rotormodul (18) aufzunehmen, zylindrisch ist und an seinem hinteren Teil durch einen geformten Boden verschlossen ist.

9. Elektrischer Aktuator nach dem vorstehenden Anspruch,
**dadurch gekennzeichnet, dass** der geformte Boden einen Ring zum Führen der Drehachse (26) des Rotors (27) umfasst.

10. Elektrischer Aktuator nach Anspruch 6, **dadurch gekennzeichnet, dass** die Innenoberfläche der Zähne der Statorbleche in dem monolithischen Block eingeschlossen ist, wobei die Dicke des umhüllenden Kunststoffmaterials geringer als der Luftspalt ist, der zwischen der zylindrischen Außenoberfläche des Rotors und dem zylindrischen Mantel liegt, der durch die Oberfläche der Statorzähne definiert ist.

11. Elektrischer Aktuator nach Anspruch 1, **dadurch gekennzeichnet, dass** der Hohlraum (12) mündend ist.

12. Elektrischer Aktuator nach dem vorstehenden Anspruch,
**dadurch gekennzeichnet, dass** er ein drittes Modul vorweist, das eine elektronische Schaltung (17) aufweist, und dass das dritte Modul den Aktuator auf dem hinteren Teil verschließt.

13. Verfahren zum Herstellen eines elektrischen Aktuators nach Anspruch 1 mit einem magnetisierten Rotormodul (18), das aus einem Flansch (19) besteht, der ein Führungslager (28) umhüllt, das die Führung der Achse (26) des Rotors (27) sicherstellt, **dadurch gekennzeichnet, dass** es die folgenden Schritte aufweist:
- Umspritzen eines vorderen Führungslagers (28) zum Ausbilden des Flansches mit seinen Positionierungs- und Indexierungsnocken (20),
- Zusammenbauen eines Pakets von Blechen(50) auf der Achse (26) des Rotors (27),
- Kleben des oder der Magnete(n) (29) des Motors auf das Paket von Blechen (50),
- Zusammenbauen des hinteren Führungslagers (28') auf der Achse (26), die das Paket von Blechen (50) aufweist.

14. Elektrischer Aktuator nach Anspruch 1, **dadurch gekennzeichnet, dass** der Aktuator intelligent ist, wobei das umhüllte Statormodul (9) eine elektronische Schaltung (17) unterbringt, die dazu bestimmt ist, den Aktuator zu bedienen, und die Umschalttransistoren und eine Schaltung für eine logische Steuerung dieser Umschalttransistoren vorweist.

15. Elektrischer Aktuator nach dem vorstehenden Anspruch,
**dadurch gekennzeichnet, dass** ein Deckel (54) diese elektronische Schaltung (17) umschließt, die auf dem Statormodul (9) platziert ist.

## Claims

1. An electrical actuator consisting of a polyphase brushless motor having a rotor (27) provided with permanent magnets (29 to 38) and secured to an output shaft (26), and a stator (1) having coils (2) and ensuring magnetic driving of the rotor (27), a first electrical connection assembly (6) supplying power to the coils (2), said stator (1) being integrated into a stator module (9) consisting of a material encasing the coiled stator (1) as well as the first electrical connection assembly (6), **characterized in that** said rotor (27) is integrated into a rotor module (18) consisting of a flange (19) encasing a guide bearing (28) ensuring the guidance of the shaft (26) of the rotor (27) and **in that** the stator modules (9) and rotor modules (18) have elements for indexing and fastening relative to one another, said flange (19) with its positioning and indexing lugs having centering lugs (20, 21, 22, 23, 24) which extend radially and which are capable of engaging in complementary recesses (44, 45, 46, 47, 48, 49) formed on the stator module (18), said flange (19) forming, on the inside of the rotor module (18), a ring (25) for receiving the guide bearing (28), the motor consists of two complementary components:
- the rotor module (18) forming a first component integrating the rotor (27), said guide bearing (28) and the flange (19) ensuring that the guide bearing (28) is encased;
- the stator module (9) forming a second component integrating the stator (1) and the first electrical connection assembly (6) which are encased together,
- the rotor module (18) is positioned in the stator module (9) by inserting in a movement axial to the axis of rotation of the actuator.

2. An actuator according to claim 1, **characterized in that** it comprises a second electrical connection assembly (7) managing the power supply and the signals from the detection elements required for switching the different phases of the motor and **in that** the stator module (9) encases the first electrical connection assembly (6) and the second electrical connection assembly (7).

3. The electrical actuator according to claim 2, **characterized in that** the first electrical connection assembly (6) and the second electrical connection assembly (7) form a radial encased extension of said stator module (9).

4. The electrical actuator according to claim 2, **characterized in that** the first electrical connection assembly (6) and the second electrical connection assembly (7) form an axial encased extension of said stator module (9).

5. The electrical actuator according to any of the preceding claims,
**characterized in that** said flange (19) has an external shape complementary to the indexing zone of the stator module (9).

6. The electrical actuator according to any of the preceding claims,
**characterized in that** said stator module (9) comprises a set of stacked sheets (50) having a plurality of teeth, at least some of which support an electric coil, each of said electric coils having connection tabs extending axially, said stator module (9) further having a connection assembly (7) consisting of connection tabs for connecting a complementary connector, all of the components comprising said set of coiled sheets, said connection tabs of the coils and said connection tabs for connecting a connector are encased by an insulating plastics material, thereby forming a single piece covering the outer surfaces of said stacked sheets (50).

7. The electrical actuator according to the preceding claim,
**characterized in that** the inner surface of said teeth of the stator sheets is flush relative to the inner surface of said single piece.

8. The electrical actuator according to claim 1, **characterized in that** a cavity (12) suitable for receiving said rotor module (18) is cylindrical and closed at its rear portion by a molded bottom.

9. The electrical actuator according to the preceding claim,
**characterized in that** said molded bottom comprises a ring for guiding the rotating shaft (26) of the rotor (27).

10. The electrical actuator according to claim 6, **characterized in that** the inner surface of said teeth of the stator sheets is included in said single piece, the thickness of the plastics encasing material being less than the air gap between the outer cylindrical surface of the rotor and the cylindrical casing defined by the surface of the stator teeth.

11. The electrical actuator according to claim 1, **characterized in that** said cavity (12) is an opening.

12. The electrical actuator according to the preceding claim,
**characterized in that** it has a third module having an electronic circuit (17) and **in that** the third module closes the rear portion of the actuator.

13. A method for producing an electrical actuator according to claim 1 having a magnetized rotor module (18) consisting of a flange (19) encasing a guide bearing (28) ensuring the guidance of the shaft (26) of the rotor (27),
**characterized in that** it comprises the following steps:
- overmolding a front guide bearing (28) to form the flange with its positioning and indexing lugs (20),
- assembling a stack of sheets (50) on the shaft (26) of the rotor (27),
- adhering the magnet(s) (29) of the motor to the stack of sheets (50),
- assembling the rear guide bearing (28') on the shaft (26) having the stack of sheets (50).

14. The electrical actuator according to claim 1, **characterized in that** the actuator is smart, the encased stator module (9) receiving an electronic circuit (17) intended for controlling the actuator and having switching transistors and a logic control circuit for these switching transistors.

15. The electrical actuator according to the preceding claim,
**characterized in that** a cover (54) encloses the electronic circuit (17) positioned on said stator module (9).
